# EUROPEAN PATENT APPLICATION

(11) **EP 2 221 566 A1**
(43) Date of publication of application: **25.08.2010**
(21) Application number: 10153568.0
(22) Date of filing: 15.02.2010
(51) Int. Cl.: F26B 5/14

(54) **Transformation of a wet organic fraction of municipal solid waste**

(30) Priority: 19.02.2009 IT RE20090013
(71) Applicant: Greenmec S.r.l., 42100 Reggio Emilia (RE) (IT)
(72) Inventor: Nola, Felice Guglielmo, 42100, Reggio Emilia (RE) (IT); Vitiello, Giuseppe, 42100, Reggio Emilia (RE) (IT)
(74) Representative: Corradini, Corrado

(57) **Abstract**

A process of transformation of the wet organic fraction of municipal solid waste comprises: mincing the material to be treated; pressing the minced material against a holed wall by means of an action of compression, the holed wall allowing passage of the liquid fraction but retaining the solid fraction of the material; separating the liquid fraction from the solid fraction; separating the liquid fraction from the solid fraction at the same time as performing the pressing operation; finally, performing a composting treatment of the solid fraction derived from the pressing of the minced material in order to transform the material into compost. A machine for carrying out the process is also disclosed.

## Description

The invention concerns the transformation of a wet Organic Fraction of Municipal Solid Waste (OFMSW), which term is taken as meaning the part of waste consisting principally of putrescible organic material containing a high level of moisture (on average around 60-90%).

In particular, this wet organic fraction is obtained from "separate waste collection" as defined in article 183, paragraph 1, section F of Legislative Decree 152/2006.

The treatment according to the invention comprises the production of compost.

Composting, as is known, is an aerobic biological treatment which tends to mineralise the more easily fermentable organic compounds while re-organising the less reactive organic substances from a microbiological point of view (for example cellulose and lignin) into a complex matrix represented by humic molecules.

From the biochemical point of view, during the composting process there is both a degradation of the organic substance, such as to drastically reduce the putrescibility of the biomass constituting the initial substrate (stabilisation), and a progressive humification (maturation), with an accumulation of substances that enrich the finished compost.

The moisture coming from differentiated collection is usually characterised by TS (total dry substance) averaging about 25% and contained in volatile substance of 80% of the dry substance.

This material is substantially characterised by a high level of moisture (beyond 75%); it must be transformed into an improver which, on the contrary, has to have moisture values of not more than 50%.

Also in relation to the percentage of volatile carbon, and the carbon/nitrogen ratio, there is a need for a considerable reduction of the initial amounts in order for them to be made compatible with the technical standards relating to compost or improvers.

For these reasons, the moist organic fraction of Municipal Solid Waste (OFMSW) is not suitable for treatment for composting, as the low dry content is not sufficient to guarantee the characteristics of structural stability of the mass; this leads to a need to add substantial quantities of structuring agents and produces percolates which significantly impact on the economic sustainability of the whole process.

One of the presently-known techniques for disposing of the wet organic fraction of municipal solid waste substantially includes the following fractions:
- breaking the waste collection bags and coarsely mincing the material;
- initial screening to separate coarse impurities, which cannot be used in a composting/anaerobic digestion treatment;
- mixing and soaking the material in a hydropulper, adding considerable quantities of water;
- further mechanically separating impurities;
- treating the water/dry waste mixture by means of anaerobic digestion, thereby producing biogas (methane);
- biologically purifying the surnatant water of the anaerobic process;
- disposing of the digested sludge in landfill sites, or if possible transforming it into compost.

A significant advantage of this technique is that it enables municipal solid waste to be disposed of without giving rise to atmosphere-polluting products of combustion, while at the same time enabling significant quantities of biogas to be obtained, which can be reused to produce energy, and also substances such as compost, compost being useful as a fertiliser and soil improver.

A disadvantage of this technique is that plants need to be large-scale and complex if their use is to be economically rational, and consequently they need to be supplied with large volumes of material; therefore the cost of such a plant, together with its running costs, is such that it is discouraged for a user population of fewer than 200,000 inhabitants.

The need for relatively large-volume digestion plants is due for example to the fact that almost all the waste material collected, together with a significant amount of water, is treated in a digester.

Further, since it is necessary to soak almost all the collected waste material, which also includes parts that are to a greater or lesser degree solid, relatively large-scale, costly soaking plants are required, together with relatively long soaking operations.

Further, solid parts are in any case left over after the soaking process, occupying useful space without contributing to biogas production and thus lowering productivity in terms of biogas produced; these parts also produce masses of anaerobically-digested material, the treatment of which in a subsequent aerobic composting fraction is problematic.

The enzyme activity potential of the sludge which is sent for composting is practically exhausted because of the treatment in the digester; therefore the compost which is obtained from it has less fertilising capacity.

The aim of this invention is a process for transforming the wet organic fraction of municipal solid waste which comprises production of compost, and a relative machine, which are capable of obviating the above-mentioned drawbacks in the prior art.

This and other aims are attained by the invention as it is characterised in the claims.

The process of the invention comprises:
- mincing the material to be treated;
- pressing the minced material by means of a compression action against a holed wall which allows the passage of the liquid fraction but retains the solid fraction;
- separating the liquid fraction from the solid fraction, at the same time as the pressing operation takes place;
- composting treatment of the solid fraction deriving from the pressing of the minced material in order to transform the material into compost.

Preferably, the liquid fraction which is obtained by pressing the minced material is subjected to anaerobic digestion treatment.

In particular, the treatment of the liquid fraction by anaerobic digestion is of the type for transforming organic substances into biogas.

Excellent results have been obtained from the pressing operation by advancing the minced material in a direction which is parallel to the contact surface of the holed wall while the minced material is being subjected to pressure against the holed wall, thus giving rise to an abrading action on the material. In detail, pressing is performed as the minced material is being advanced by a rotating screw conveyor means in an axial holed chamber which is laterally delimited by the holed wall.

Preferably, the wet organic fraction of municipal solid waste prevalently comprises putrescible organic waste with a high humidity content, and exhibits average total dry substance values of between 10 and 40%.

The machine of the invention, which performs the described pressing, is disclosed in detail herein below, with the aid of the appended figures of the drawings, which illustrate an embodiment of the machine as a non-exclusive example.

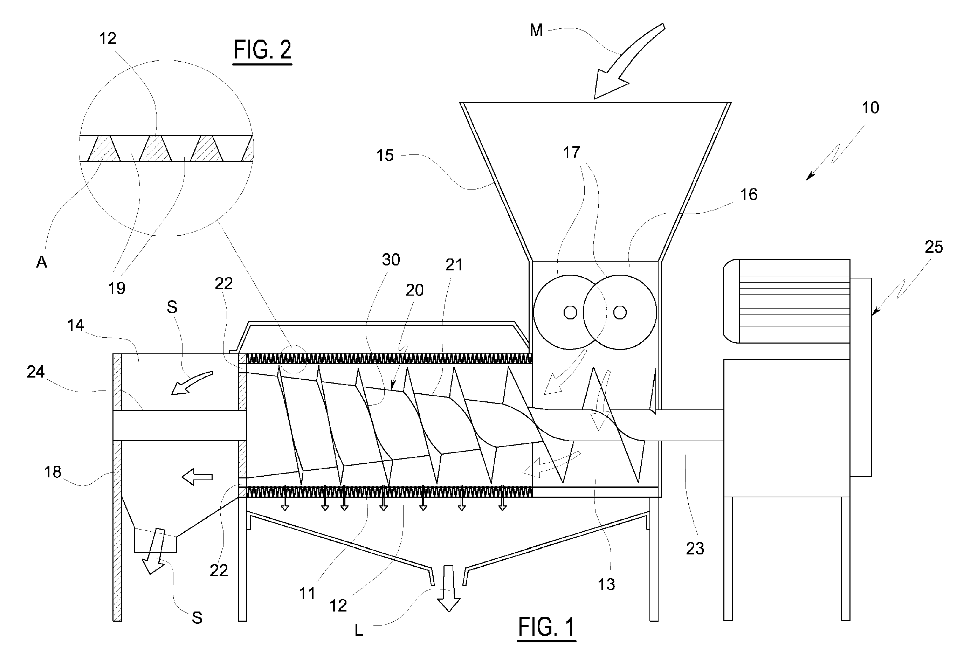

Figure 1 is a schematic section view of the machine.

Figure 2 is an enlarged detail of figure 1.

In the invention, the machine, which is indicated in its entirety by reference numeral 10, comprises an axial pressing chamber 11 which is at least partially delimited by a holed wall 12, which wall allows the passage of the liquid fraction and retains the solid fraction. Preferably, the holed wall 12 completely surrounds the axial pressing chamber 11 externally.

The machine 10 further comprises a central, axial compression body 20 which is in a coaxial position within the axial pressing chamber 11, externally and laterally surrounded thereby.

The central body 20 is rotated about its axis, relative to the holed wall 12. To this end, a motor 25 can be provided, for example which acts upon the rear end of the central body 20.

As it rotates, the central body 20, in combination with the holed wall 12, compresses the material introduced into the chamber, and separates out the liquid fraction, which passes through the holed wall 12.

In detail, the central body 20 comprises elements 30 in relief, which are attached to its lateral surface and which axially move the material along the pressing chamber, from an upstream position to a downstream position.

Preferably, the inner surface of the holed wall 12 is a rotation surface and its radial distance with respect to the lateral surface of the central body 20 diminishes in the direction of advancement of the material inside the chamber 11, so that the cross-section of the pressing chamber 11 diminishes in a downstream direction.

In detail, the holed wall 12 exhibits a tubular form with a constant section and a cylindrical inner surface; further, the portion 21 of the central body which is situated in the chamber 11 exhibits the shape of a truncated cone, the diameter of which increases in a downstream direction. Therefore the distance between the wall 12 and the surface of the portion 21 diminishes in a downstream direction.

Alternatively the holed wall 12 exhibits a tubular form with a decreasing section in a downstream direction and the portion 21 of the central body 20 exhibits a constant section.

In the embodiment shown in the figures, an inlet chamber 13 is arranged upstream of the pressing chamber 11, which inlet chamber 13 is entirely open on the side where it joins the chamber 11. At the chamber 13, the central body 20 takes the form of a shaft 23, the rear end of which projects from the rear side of the chamber 13 and couples with the motor 25.

Preferably the elements 30 in relief on the lateral surface of the central body 20 are constituted by a screw with one or more threads which axially advances the material along the pressing chamber. The screw 30 also extends onto the shaft 23 of the inlet chamber 13.

Preferably, the pitch of the turns of the screw 30 decreases inside the chamber 11, in the direction of advancement of the material.

An inlet hopper 15, which is arranged above the inlet chamber 13, conveys the material to the chamber 13. A mincing chamber 16 is arranged in an intermediate position between the hopper 15 and the inlet chamber 13, in which mincing chamber 16 usual mincing means 17 operate, for example motorised counter-rotating mincing discs.

The downstream end of the central body 20 exhibits the shape of a shaft 24 which is supported by a support wall 18.

Axial openings 22 are provided around the downstream end of the truncated-cone portion 21, which allow the material treated by the chamber 11 to exit towards a downstream chamber 14.

Preferably, the holed wall 12 affords openings 19 which give rise to a sharp edge on the inner surface. In detail, the openings 19 are tapered holes, the smallest diameter of which is situated on the inner surface and measures preferably 1-2mm. Thanks to their geometrical shape, a corresponding number of zones with sharp edges A, in particular an acute angle, are defined on the inner surface of the wall 12 in proximity of the holes 19.

In operation, the material to be treated M (wet Organic Fraction of Municipal Solid Waste) is introduced into the machine 10 via the chamber 16 where it undergoes a mincing action following rotation of the means 17, which cut it into relatively small parts, for example exhibiting dimensions of less than 2cm x 10cm.

The minced material then passes into the inlet chamber 13, where it is captured by the turns of the rotating screw 30 and pushed into the pressing chamber 11. Here the minced material is pushed in an axial direction, or in any case a direction having an axial component, by the action of the screw 30, and since the section of the chamber 11 narrows in a downstream direction, the material is also pressed against the holed wall 12. At the same time, the material is also forced to advance in an axial direction (or in any case in a direction with an axial component) while it is being radially compressed against the holed wall 12. Consequently, as the material advances downstream in the pressing chamber 11, the material is radially pressed against the holed wall 12 with a relatively strong pressure, at the same time being abraded against the inner surface of the wall 12.

The result is an effective separating action whereby the liquid fraction L exiting from the chamber 11 through the holes in the wall 12 is separated from the solid fraction S, which remains in the chamber 11 and finally exits from the chamber 11 through the openings 22, after having travelled the entire axial length of the chamber 11.

The liquid fraction L is then preferably conveyed to an anaerobic digestion treatment plant in order to produce biogas, while the solid fraction S is conveyed to a composting treatment.

In an alternative embodiment (not shown in the figures), the axial pressing chamber 11 is delimited on the inner side thereof by the holed wall 12, while it is externally delimited by the lateral wall of the central axial body 20, the central axial body 20 in this case forming a concave inner surface, to which the elements 30 in relief, which move the material axially, are attached.

The pressing action on the material is particularly effective, above all because of the substantially uniform compression that the entire mass of material receives, and because pressing takes place via an action of compression accompanied by axial motion, which leads to the material being abraded against the entire surface of the wall 12.

This abrading action provides various important results, in addition to separating the liquid fraction L from the solid part S:
- the material, in scraping under radial pressure against the holed surface is subjected to a fraying action which effectively separates, along with the liquid fraction, also the particles which are richer in volatile carbon from the drier fractions, as experimental observations have shown;
- further, the fraying action also abrades the drier parts, thus preparing them for an improved composting treatment;
- further, the fraying/scraping action means that subsequently-arriving material removes any particles which might linger in the close vicinity of the holes; in this way, a cleaning action is performed on the surface of the wall 12, thus keeping the holes 19 free and functioning.

The liquid fraction L separated by the machine exhibits characteristics which are favourable for an effective, high-output, anaerobic digestion treatment.

One explanation is that, as previously observed, the pressing of the material performed in accordance with the invention not only effectively separates the solid parts, but also gives rise to a fluid which is rich in volatile carbon, and consequently yields excellent results with anaerobic digestion.

Further, thanks to the invention, only the pressed liquid fraction (which accounts for around 50-60%) of the entire mass of treated municipal solid waste is sent to the digester, without there being any need to add water; consequently, the digestion plant can be smaller than is necessary in the prior art, where before being treated in the digester, almost all the material undergoes a soaking treatment with the addition of water.

Further, with the invention, soaking is unnecessary and the actual digestion operation has been found to be faster and more productive.

As for the solid fraction which the machine separates, it is subjected to a composting treatment up until the material is transformed into compost.

A series of chemical-physical and edaphic factors (i.e. relating to the specific characteristics of the material) conditions the progress of biological reactions that bring about composting.

A faster or slower process governing these factors is vital to the correct evolution towards definitive stabilisation of the material subject to treatment, in terms of both duration of the process and quality of the final product.

These factors are substantially: moisture, concentration of nutrients (carbon and nitrogen), the structure of the material, concentration of oxygen and temperature.

It was surprisingly found that the solid fraction separated by the machine exhibits extremely favourable characteristics for undergoing an effective composting treatment.

The pressing and separating treatment of the liquid and solid fractions affects the above-described factors and optimises them for the composting process.

In particular, the treatment has a positive effect on the following parameters: moisture;
content of volatile carbon and nitrogen;
structure and porosity of the material to be composted.

One explanation is that the solid parts are not only de-fibred, but are also deprived of volatile carbon by the abrasive action against the holed surface, consequently providing excellent results in the composting treatment.

Owing to the smaller presence of volatile carbon to be oxidised, a smaller amount of oxygen is required, with consequently smaller energy consumption, and the causes of production of foul-smelling substances are eliminated, thus optimising the quality of the compost produced.

The pressing and separating treatment of the liquid and solid fractions can exert a gradual and constant pressure on all the material, so that at the end of the process the material has a uniform degree of moisture and optimal conditions in terms of structure and porosity for the composting stage, to the point of being as good as the organic matrices coming from the maintenance of vegetation, in terms of both the optimal carbon/nitrogen ration and the concentration of residual moisture.

Further, the abrading action reduces the material to very small-sized particles and this aspect is also favourable for the composting action.

Further, given the effectiveness of the separation of the liquid fraction, the humidity content left in the solid fraction is highly suitable for composting.

Further, the volume of the material to be sent for composting is relatively small (20-30%) thus enabling smaller plants to be used.

The mechanical action, which works on limited volumes of moist material, is capable of extracting, together with the liquid, also the nutrient substances and the microelements contained in the internal structure of the material. Thus the concentration of these substances is limited in the solid fraction, which enhances its aerobic stabilisation. Rather, the above-described substances are concentrated in the extracted liquid fraction which is therefore more productive in in an anaerobic digestion process able to transform organic substances into biogas.

In conclusion, thanks to the invention, it is possible to build relatively simple, small plants which are capable of treating wet municipal solid waste for a user population of 100,000 people at advantageous economic conditions.

The main characteristics of the two fractions can be summed up as follows:

| PARAMETER | LIQUID FRACTION | SOLID FRACTION |
|---|---|---|
| PHYSICAL CONDITION | PUMPABLE SLUDGE | SOLID |
| COD (chemical oxygen demand) | 388 g/1 | |
| RESIDUE AT 105 °C | 38.7 % | 53% |
| Residue at 550 °C | | <1% |
| Total organic carbon | 45.2% s.s.¹ | 24.6% s.s.¹ |
| Total nitrogen | 3.3 % s.s.¹ | 1.6% s.s.¹ |
| Volatile organic carbon | 36.5 % s.s.¹ | |
| Biological process hazard characteristics | ABSENT | ABSENT |
| ¹S.s: suspended solids | | |

The following data characterise biogas production from the extracted liquid fraction:

| PROCESS PARAMETER | INTERVAL OF VALUES |
|---|---|
| Solids in treated waste | 25-40,%TS² |
| Hydraulic retention time | 10-15, up to 40 days |
| Process yields | |
| Biogas production | 150-200 m³/t waste |
| Specific biogas production | 0.65-0.75 m³/kgVS³ |
| ²TS: total solids ³ Vs._{:} volatile solids | |

Obviously numerous practical and applicational modifications can be introduced to the invention without thereby forsaking the ambit of the inventive step as claimed herein below.

## Claims

1. A process of transformation of a wet organic fraction of municipal solid waste, **characterised in that** it comprises:
mincing a material to be treated;
pressing the minced material by means of compression against a holed wall which allows passage of a liquid fraction but retains a solid fraction;
separation of the liquid fraction from the solid fraction, contemporaneous with a pressing operation;
composting treatment of the solid fraction deriving from the pressing of the minced material in order to transform the minced material into compost.

2. The process of claim 1, wherein the liquid fraction deriving from pressing the minced material is subjected to an anaerobic digestion treatment.

3. The process of claim 1, wherein the pressing operation comprises advancing the minced material, while the minced material is being subjected to compression against the holed wall, in a direction which is parallel, or has a component which is parallel, to a contact surface of the holed wall, in such a way as to produce a rubbing and fraying action of the material against the holed surface.

4. The process of claim 3, wherein the pressing operation is performed with the minced material being advanced by a rotating screw conveyor within an axial holed chamber which is laterally delimited by the holed wall, the holed wall exhibiting a section which decreases in an advancement direction thereof.

5. The process of claim 1, wherein a wet organic fraction of municipal solid waste prevalently contains putrescible organic waste with a high moisture content, exhibiting average values of total dry substance of between 10% and 40%.

6. A machine for actuating the process of any one of the preceding claims, **characterised in that** it comprises:
an axial pressing chamber (11) which is at least partly delimited by a holed wall (12), the holed wall (12) allowing passage of a liquid fraction but retaining a solid fraction;
an axial central compression body (20), in a coaxial position in the pressing chamber (11);
motor means, which rotate the central body (20) in relation to the holed wall;
the central body (20) being capable, when rotating and in combination with the holed wall (12), of compressing the waste material which is introduced into the chamber (11), thus obtaining separation of the liquid fraction therefrom and passage thereof through the holed wall (12).

7. The machine of claim 6, **characterised in that** the central body (20) comprises, on a lateral surface thereof, elements in relief (30) which axially advance the material from an upstream position to a downstream position along the pressing chamber (11).

8. The machine of claim 7, **characterised in that** a surface of the holed wall (12) is a rotation surface and a radial distance of the surface from the lateral surface of the central body (20) decreases in an advancement direction of the waste material.

9. The machine of claim 7, **characterised in that** the elements in relief (30) of the lateral surface of the central body (20) are constituted by a screw exhibiting one or more threads, which screw advances the material axially along the pressing chamber (11).

10. The machine of claim 9, **characterised in that** the threads of the screw exhibit a decreasing pitch in the advancement direction of the material.

11. The machine of claim 6, **characterised in that** the holed wall (12) affords holes which give rise to a sharp edge on the inner surface of the holed wall (12).
